(19) Europäisches Patentamt
European Patent Office
Office européen des brevets

(11) **EP 4 095 411 A1**

(12) **EUROPÄISCHE PATENTANMELDUNG**

(43) Veröffentlichungstag:
**30.11.2022   Patentblatt 2022/48**

(21) Anmeldenummer: **22173171.4**

(22) Anmeldetag: **13.05.2022**

(51) Internationale Patentklassifikation (IPC):
**F16F 7/10** $^{(2006.01)}$

(52) Gemeinsame Patentklassifikation (CPC):
**F16F 7/10**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **20.05.2021   DE 102021113167**

(71) Anmelder: **MTU Aero Engines AG
80995 München (DE)**

(72) Erfinder:
• **Hartung, Andreas
  80995 München (DE)**
• **Schlemmer, Markus
  80995 München (DE)**
• **Krack, Malte
  70569 Stuttgart (DE)**
• **Theurich, Timo
  70569 Stuttgart (DE)**

(54) **ANORDNUNG ZUR MINDERUNG EINER SCHWINGUNG**

(57)   Die vorliegende Erfindung betrifft eine Anordnung (10) zur Minderung einer Schwingung einer schwingfähigen Struktur (12), aufweisend:
- eine Struktur (12) mit mindestens einer Mode in mindestens einer Richtung (j), und
- mindestens eine Schwingungsminderungseinrichtung, die zumindest ein eine Kavität (14), insbesondere geschlossene Kavität (14), aufweisendes Gehäuse, welches durch die Struktur (12) gebildet ist oder an der Struktur (12) vorgesehen ist, und zumindest einen Körper (16) aufweist, der zur Ausführung von Stoßkontakten mit einem ersten Flächenabschnitt (F1, W2, Z2, Z12) und einem zweiten Flächenabschnitt (F2, W4, Z2, Z4, Z14) einer Innenwand des Gehäuses in der zumindest einen Kavität (14) derart angeordnet ist, dass er solange, wie die Struktur (12) in der mindestens einen Mode in der mindestens einen Richtung (j) angeregt ist, wenigstens zeitweise, insbesondere unaufhörlich, Stoßkontakte mit dem ersten Flächenabschnitt und dem zweiten Flächenabschnitt der Innenwand des Gehäuses ausführt, wobei der erste Flächenabschnitt und/oder der zweite Flächenabschnitt der Innenwand des Gehäuses eine Wölbung aufweisen.

Fig. 1

EP 4 095 411 A1

**Beschreibung**

Die vorliegende Erfindung betrifft eine Anordnung zur Minderung einer Schwingung.

In vielen - teilweise auch ganz unterschiedliche technischen Bereichen - gibt es schwingfähige Strukturen, deren Schwingungen, insbesondere die Amplituden der Moden bzw. Eigenschwingungen der Strukturen, durch bekannte Maßnahmen zur Schwingungsminderung, wie z.B. Reibdämpfung, die Anbringung von Zusatzgewichten oder den Einsatz von rheologischen Flüssigkeiten, aktive Dämpfungssysteme, bspw. Piezodämpfer, oder die Kopplung mit zusätzlichen Feder-Masse-Systemen, reduziert werden und/oder bei denen eine Schwingungsminderung vorteilhaft sein kann, beispielsweise um die Lebensdauer der Struktur zu verlängern, Geräuschemissionen der Struktur zur verringern und/oder die Gefahr einer Funktionsbeeinträchtigung der Struktur zu reduzieren.

Beispiele für solche schwingfähigen Strukturen sind Teile, Abschnitte und Komponenten von Motoren, z.B. Elektro- und/oder Verbrennungsmotoren, insbesondere von KFZ-Motoren oder Schiffsmotoren, von Turbinen, von Fertigungsmaschinen, z.B. zum Fräsen und/oder Drehen, von Triebwerken, insbesondere Flugtriebwerken, von Antrieben, beispielsweise Raketenantrieben, von Bauwerken, z.B. Gebäuden oder Brücken, von Fahrzeugen, insbesondere Automobilen, von Flugzeugen, von Raketen, von Satelliten, von irgendwelchen Verkehrsmitteln oder auch damit in Kontakt stehende Teile, Abschnitte und/oder Komponenten.

Eine Aufgabe einer Ausführung der vorliegenden Erfindung ist es, eine verbesserte Art der Schwingungsminderung bereitzustellen.

Diese Aufgabe wird durch eine Anordnung mit den Merkmalen des Patentanspruchs 1 gelöst. Vorteilhafte Ausführungsformen der Erfindung sind Gegenstand der Unteransprüche.

Nach einem Aspekt der vorliegenden Erfindung weist eine Anordnung zur Minderung einer Schwingung einer schwingfähigen Struktur auf:

- eine Struktur mit mindestens einer Mode in mindestens einer Richtung, und

- mindestens eine Schwingungsminderungseinrichtung, die zumindest ein eine Kavität, insbesondere geschlossene Kavität, aufweisendes Gehäuse, welches durch die Struktur gebildet ist oder an der Struktur vorgesehen ist, und zumindest einen Körper aufweist, der zur Ausführung von Stoßkontakten mit einem ersten Flächenabschnitt und einem zweiten Flächenabschnitt einer Innenwand des Gehäuses in der zumindest einen Kavität derart angeordnet ist, dass er solange, wie die Struktur in der mindestens einen Mode in der mindestens einen Richtung (durch Fremd-, Selbst- und/oder Parametererregung und/oder Anfangsbedingungen) angeregt ist, wenigstens zeitweise, insbesondere unaufhörlich, Stoßkontakte mit dem ersten Flächenabschnitt und dem zweiten Flächenabschnitt der Innenwand des Gehäuses ausführt, wobei

der erste Flächenabschnitt und/oder der zweite Flächenabschnitt der Innenwand des Gehäuses eine Wölbung aufweisen.

Die Wölbung kann konvex sein, also eine Einbuchtung in die Kavität hinein bilden (entspricht nachfolgend einer positiven Krümmung), und/oder kann konkav sein, also eine Ausbuchtung der Kavität bilden (entspricht nachfolgend einer negativen Krümmung).

Die mindestens eine Mode der Struktur ist eine Schwingung, insbesondere Eigenschwingung, der Struktur, in welcher die Struktur schwingen und/oder angeregt werden kann.

Hierbei können in einer Ausführung durch den kontinuierlichen, stoßbasierten Impulsaustausch, insbesondere mittels durch im Wesentlichen elastische Stöße, Schwingungen der Struktur, wie Vibrationen, besonders effektiv vermieden oder zumindest gemindert, vorzugsweise zumindest erheblich vermindert werden. Insbesondere können hierbei in einer Ausführung die Schwingungsamplituden der Struktur mit einer vergleichsweise geringen Gesamtmasse des zumindest einen Körpers signifikant reduziert werden, ohne dass dabei der oder die Körper gleichzeitig an der Stelle der maximalen Modenamplitude angeordnet sein müssen, was in Abhängigkeit von der Ausgestaltung der konkreten Struktur, z. B. einer Brücke, mitunter aufgrund geometrischer oder struktureller Beschränkungen nicht oder nur schwierig umsetzbar sein kann.

Indem der Impulsaustausch zwischen der Struktur und dem zumindest einen Körper über das Gehäuse, das heißt zwischen der Struktur und einem oder mehreren Körpern über das Gehäuse, in dessen Kavität der zumindest eine Körper angeordnet ist, durch im Wesentlichen elastische Stöße, insbesondere mit höchstens 20%, vorzugsweise höchstens 10%, besonders vorzugsweise höchstens 5% Energiedissipation pro Periode der Schwingung bezogen auf die mit der Schwingung assoziierten kinetischen Energie), z.B. durch Reibung, erfolgen kann, können in einer Ausführung Schwingungen der Struktur besonders effektiv mit nur geringen Zusatzmassen des oder der Körper reduziert werden.

Durch die Ausgestaltung, dass zumindest ein Flächenabschnitt des ersten und des zweiten Flächenabschnitts der Innenwand des Gehäuses die Wölbung aufweist, kann im Vergleich zu einem Fall, in dem sowohl der erste als auch der zweite Flächenabschnitt ein ebener Flächenabschnitt sind, ein verbesserter Energietransfer von dem zumindest einen Körper in die höheren Moden der Struktur erzielt werden.

In einer Ausführung ist der zumindest eine Körper eine Kugel mit einem Radius R, wobei für eine Krümmung k der Wölbung gilt: $-\frac{1}{R} \le k \le \frac{1}{R}$ , insbesondere $-\frac{1}{R} \le k \le -\frac{1}{4R}$ oder $\frac{1}{4R} \le k \le \frac{1}{R}$ .

In einer Ausführung gilt für die Krümmung k: $k \ne 0$.

In einer Ausführung gilt für die Krümmung k der Wölbung: $k = -\frac{1}{R}$ , oder es gilt für die Krümmung k der Wölbung $k = \frac{1}{R}$ .

Hierdurch kann in einer Ausführung ein optimaler Energietransfer von dem zumindest einen Körper in die höheren Moden der Struktur erzielt werden.

In machen Ausführungen weist die Schwingungsminderungseinrichtung mehrere der beschriebenen, insbesondere geschlossene Kavitäten und mehrere der beschriebenen Körper auf. Die vorliegende Beschreibung von "zumindest einer" Kavität und "zumindest einem" Körper kann entsprechend für jede Kavität und jeden Körper der Schwingungsminderungseinrichtung entsprechend zutreffen.

In machen Ausführungen beträgt die Anzahl der Kavitäten und/oder Körper z.B. 1, 2, 3, 4, 5, 10, 20, 100, 150, 200 oder mehr oder liegt in einem Bereich zwischen von 1 bis 300, 1 bis 200, 1 bis 150, 1 bis 100, 1 bis 50, 1 bis 30, 2 bis 10 oder 5 bis 30.

Vorzugsweise ist in der Mehrzahl der Kavitäten oder in jeder Kavität der Schwingungsminderungseinrichtung jeweils nur bzw. genau ein Körper angeordnet.

Die im Wesentlichen elastischen Stöße können zwischen metallischen und/oder keramischen Kontakt- bzw. Stoßflächen des jeweiligen Körpers und der jeweiligen Kavität bzw. des Gehäuses stattfinden.

In einer Ausführung ist ein dritter Flächenabschnitt der Innenwand, der sich parallel zu der mindestens einen Richtung erstreckt, ein ebener Flächenabschnitt.

Hierdurch kann in einer Ausführung ein Abrollen des zumindest einen Körpers entlang der mindestens einen Richtung erfolgen.

In einer Ausführung weisen der erste und der zweite Flächenabschnitt der Innenwand die Wölbung auf.

Hierdurch kann in einer Ausführung der Energietransfer von dem zumindest einen Körper in die höheren Moden der Struktur weiter verbessert werden. In einer Ausführung weisen alle Flächenabschnitte der Innenwand, mit Ausnahme des dritten Flächenabschnitts eine Wölbung auf.

In einer Ausführung ist durch die Schwingungsminderungseinrichtung eine maximale Schwingungsamplitude in der mindestens einen Mode um mindestens 5%, 20%, 30%, 40% oder 50% gegenüber der Schwingungsamplitude in der mindestens einen Mode ohne Schwingungsminderungseinrichtung verringert.

In einer Ausführung ist die Struktur zumindest ein Teil oder Abschnitt einer Gasturbine, insbesondere eines Flugtriebwerks, insbesondere eine Leit- oder Laufschaufel, eines Motors, insbesondere Elektro- und/oder Verbrennungsmotors, insbesondere KFZ-Motors oder Schiffsmotors, einer Turbine, einer Fertigungsmaschine, insbesondere zum Fräsen und/oder Drehen, eines Triebwerks, insbesondere Flugtriebwerks, eines Antriebs, beispielsweise eines Raketenantriebs, eines Bauwerks, insbesondere Gebäudes oder Brücke, eines Fahrzeugs, insbesondere Automobils, eines Flugzeugs, einer Rakete, eines Satelliten oder irgendeines Verkehrsmittels ist, ein damit in Kontakt stehendes Teil ist oder ein damit in Kontakt stehender Abschnitt ist.

In einer Ausführung ist die Gesamtmasse des zumindest einen Körpers, insbesondere aller Körper der Schwingungsminderungseinrichtung zusammengenommen, mindestens 100-mal, vorzugsweise mindestens 1000-mal, insbesondere mindestens 10000-mal kleiner ist als die in der jeweiligen Mode schwingende modale Masse der Struktur und/oder die in der jeweiligen Mode schwingende modale Masse höchstens 200000-mal, vorzugsweise höchstens 100000-mal, insbesondere höchstens 50000-mal größer ist als die Gesamtmasse des zumindest einen Körpers. Für jede Kombination dieser Ober- und Untergrenzen gibt es eine Ausführung der vorliegenden Erfindung.

In einer Ausführung ist bzw. sind an der Struktur nur in solchen Bereichen die mindestens eine Schwingungsminderungseinrichtung angeordnet, in denen die Schwingungsamplitude in der mindestens einen Mode ohne Schwingungsminderungseinrichtung in dem jeweiligen Bereich mindestens 0,1%, vorzugsweise mindestens 1% und/oder höchstens 100%, 50%, 20%, 10%, 5%, 1%, 0,5%, 0,2% der maximalen Schwingungsamplitude in der mindestens einen Mode ohne Schwingungsminderungseinrichtung in dem jeweiligen Bereich beträgt. Für jede Kombination dieser Ober- und Untergrenzen gibt es eine Ausführung der vorliegenden Erfindung.

In einer Ausführung ist ein Bewegungsspiel B mindestens eines der ein oder mehreren Körper, insbesondere aller Körper, in mindestens einer Richtung, insbesondere in allen Richtungen, höchstens das 2-fache, vorzugsweise höchstens das 1-fache, insbesondere höchstens das 0,5-fache, einer, insbesondere maximalen, Querschnittsabmessung des Körpers beträgt und/oder mindestens das 0,05-fache, vorzugsweise mindestens das 0,1-fache, insbesondere mindestens das 0,2-fache, einer, insbesondere maximalen, Querschnittsabmessung des Körpers 16 beträgt. Für jede Kombination dieser Ober- und Untergrenzen gibt es eine Ausführung der vorliegenden Erfindung.

In einer Ausführung weist der zumindest eine Körper eine metallische oder keramische Oberfläche auf und ist der erste Flächenabschnitt und/oder der zweite Flächenabschnitt der Innenwand des Gehäuses eine metallische und/oder keramische Oberflächen, so dass die Stoßkontakte zwischen Metall und Metall, zwischen Keramik und Keramik oder zwischen Metall und Keramik stattfinden.

In einer Ausführung stehen der erste Flächenabschnitt und der zweiten Flächenabschnitt einander gegenüber und/der ist einer des ersten und zweiten Flächenabschnitts konvex oder konkav gekrümmt ist und/oder ist der andere des ersten und zweiten Flächenabschnitts konvex oder konkav gekrümmt oder ist eben. Dabei sind alle der folgenden Kombinationen möglich: konvex-konvex, konvex-konkav und umgekehrt, konvexeben und umgekehrt, konkav-eben und umgekehrt.

Weitere vorteilhafte Weiterbildungen der vorliegenden Erfindung ergeben sich aus der nachfolgenden Beschreibung bevorzugter Ausführungen. Hierzu zeigen, teilweise schematisiert:

Fig. 1    eine Anordnung nach einer Ausführung der vorliegenden Erfindung;

Fig. 2    eine Querschnittsansicht einer Schwingungsminderungseinrichtung nach einer Ausführung der vorliegenden Erfindung;

Fig. 3    eine Draufsicht auf eine Schwingungsminderungseinrichtung nach einer Ausführung der vorliegenden Erfindung;

Fig. 4    eine dreidimensionale Ansicht einer Schwingungsminderungseinrichtung nach einer Ausführung der vorliegenden Erfindung, und

Fig. 5, 6    den Effekt und die Effektivität der Schwingungsminderung durch eine Anordnung nach einer Ausführung der vorliegenden Erfindung.

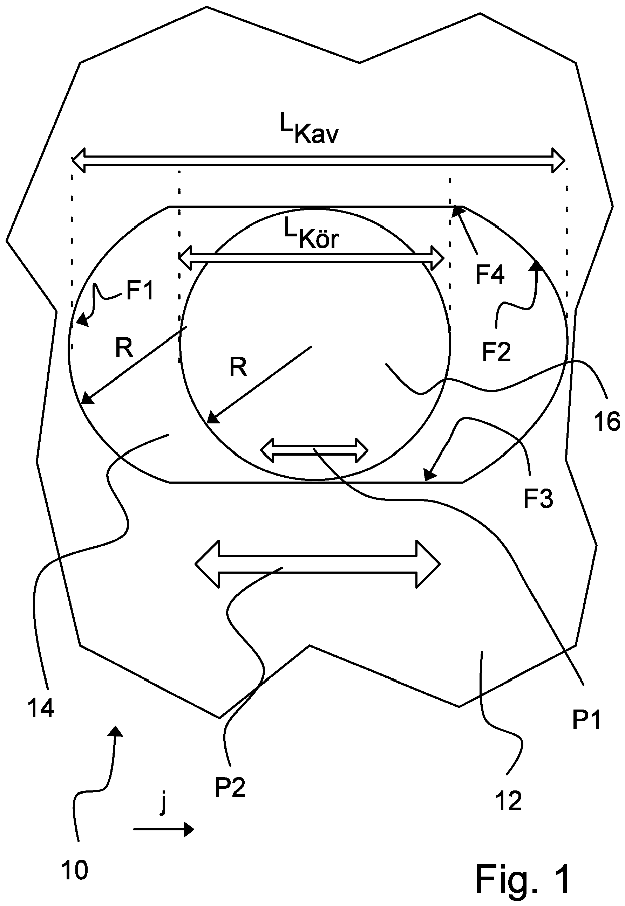

Fig. 1 zeigt eine Anordnung 10 nach einer Ausführung der vorliegenden Erfindung.

Die Anordnung 10 weist eine schwingfähige Struktur 12, welche in Fig. 1 lediglich abschnittsweise gezeigt ist, und eine Schwingungsminderungseinrichtung auf, die dafür vorgesehen ist, eine Schwingung der Struktur 12 zumindest zu reduzieren.

Die Schwingungsminderungseinrichtung weist ein eine Kavität 14, in der dargestellten Ausführung eine geschlossene Kavität 14, aufweisendes Gehäuse, das durch die Struktur 12 gebildet ist und die Kavität 14 umschließt bzw. definiert, und einen Körper 16 auf, der beispielsweise ein Metall oder eine Keramik aufweisen oder aus Metall oder Keramik gebildet sein kann, und derart in der Kavität 14 angeordnet ist, dass er sich spielbehaftet in wenigstens eine Richtung j, wie durch den in der Kavität 14 gezeigten Doppelpfeil P1 veranschaulicht, frei bewegen kann.

Weiterhin kann bei anderen, nicht gezeigten Ausführungen, die Anordnung mehrere Gehäuse aufweisen, die jeweils durch die Struktur 12 gebildet sind oder an der Struktur 12 angebracht bzw. mit dieser verbunden sind, und die jeweils eine Kavität 14 umschließen bzw. definieren, in der jeweils zumindest ein Körper 16 angeordnet ist. Dabei können die einzelnen Kavitäten 14 und die entsprechenden Körper 16 derart ausgestaltet sein, dass sich die in unterschiedlichen Kavitäten 14 angeordneten Körper 16 spielbehaftet in unterschiedlichen Richtungen frei bewegen können.

Die Struktur 12 kann zumindest ein Teil oder Abschnitt einer Gasturbine, insbesondere eines Flugtriebwerks, insbesondere eine Leit- oder Laufschaufel, eines Motors, insbesondere Elektro- und/oder Verbrennungsmotors, insbesondere KFZ-Motors oder Schiffsmotors, einer Turbine, einer Fertigungsmaschine, insbesondere zum Fräsen und/oder Drehen, eines Triebwerks, insbesondere Flugtriebwerks, eines Antriebs, beispielsweise eines Raketenantriebs, eines Bauwerks, insbesondere Gebäudes oder Brücke, eines Fahrzeugs, insbesondere Automobils, eines Flugzeugs, einer Rakete, eines Satelliten oder irgendeines Verkehrsmittels ist, ein damit in Kontakt stehendes Teil ist oder ein damit in Kontakt stehender Abschnitt sein.

Die Struktur 12 weist mindestens eine Mode, bzw. Schwingungsmode bzw. Eigenschwingung auf, in der die Struktur 12 bei bestimmungsgemäßem Gebrauch zu Schwingungen oder Vibrationen angeregt werden kann. In der in Fig. 1 gezeigten Ausführung schwingt die Struktur 12, wenn sie in der mindestens einen Mode angeregt ist, wie anhand des auf der Struktur 12 gezeigten Doppelpfeils P2 veranschaulicht, entlang der Richtung j hin und her.

Der Körper 16, welcher kugelförmig bzw. eine Kugel mit einem Radius R ist, ist zur Ausführung von Stoßkontakten mit dem durch die Struktur 12 gebildeten Gehäuse, das die Kavität 14 aufweist, derart in der Kavität 14 angeordnet, dass er, solange wie die Struktur 12 in der mindestens einen Mode angeregt ist, wenigstens zeitweise, in einer Ausführung unaufhörlich, Stoßkontakte mit dem Gehäuse, und somit mit der Struktur 12, ausführt, wodurch eine maximale Schwingungsamplitude in der Mode im Vergleich zu einem Fall, in dem Schwingungsminderungseinrichtung nicht vorgesehen ist, um mindestens 50% verringert ist.

Hierbei ist ein Bewegungsspiel B des Körpers 16 in der Kavität 14, insbesondere beim Ausführen der Stoßkontakte mit dem Gehäuse, durch eine Länge $L_{Kav}$ der Kavität 14 in Bewegungsrichtung j abzüglich der Länge $L_{Kör}$ des Körpers 16 in Bewegungsrichtung j definiert.

Die Kavität 14 bzw. eine Innenwand des Gehäuses, welches die Kavität 14 aufweist, weist einen ersten Flächenabschnitt F1 und einen zweiten Flächenabschnitt F2 auf, mit denen der Körper 16 solange wie die Struktur 12 in der mindestens einen Mode angeregt ist, wenigstens zeitweise, in einer Ausführung unaufhörlich, Stoßkontakte ausführt, wobei sowohl der erste Flächenabschnitt F1 als auch der zweite Flächenabschnitt F2 eine Wölbung aufweisen. Hierbei entspricht eine Krümmung k der Wölbung der Flächenabschnitte F1 und F2 jeweils $-\dfrac{1}{R}$. Hierdurch kann ein optimaler Energietransfer von dem Körper 16 in die höheren Moden der Struktur erzielt werden. Im Beispiel der Fig. 1 sind die Flächenabschnitte F1 und F2 jeweils konkav gewölbt. Die Kavität 14 bzw. eine Innenwand des Gehäuses weist weiterhin einen dritten Flächenabschnitt F3 und einen vierten Flächenabschnitt F4 auf, die sich parallel zu der Richtung j erstrecken und eben sind. Auf diese Weise wird ermöglicht, dass der Körper 16 auf diesen Flächenabschnitten F3 und F4 abrollen kann. Bevorzugt weist jedoch einer der Flächenabschnitte F3 und F4 ebenfalls eine Wölbung auf, so dass lediglich einer der Flächenabschnitte F3 und F4 eben ist.

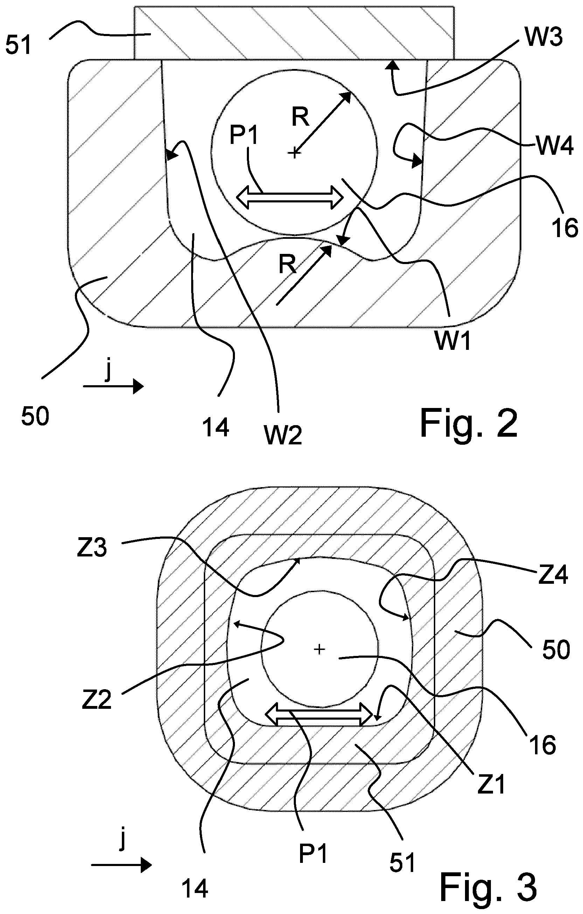

Fig. 2 zeigt eine Querschnittsansicht einer Schwingungsminderungseinrichtung nach einer Ausführung der vorliegenden Erfindung.

Die Schwingungsminderungseinrichtung weist ein Gehäuse mit einem Gehäusekörper 50 und einem Gehäusedeckel 51 auf, in dem ein kugelförmiger Körper 16 mit einem Kugelradius R angeordnet ist, der sich, solange wie die Struktur 12 in der mindestens einen Mode angeregt ist, wenigstens zeitweise, in einer Ausführung unaufhörlich, wie durch den Doppelpfeil P1 veranschaulicht entlang der Richtung j bewegt. Hierbei weist der Flächenabschnitt W1 der Innenwand des Gehäusekörpers 50 eine konvexe Wölbung auf, deren Krümmung $k = \dfrac{1}{R}$ ist, während der gegenüberliegende Flächenabschnitt W3, der durch die Innenwand des Gehäusedeckels 51 gebildet ist, eben bzw. flach ist, damit der Körper 16 abrollen kann. Die gegenüberliegenden Flächenabschnitte W2 und W4 der Innenwand des Gehäusekörpers 50, mit denen der Körper 16 die Stoßkontakte ausführt, wenn die Struktur in der Mode angeregt ist, weisen eine Wölbung auf und sind in Bezug auf die Richtung j schräg, insbesondere nicht senkrecht zu der Richtung j.

Fig. 3 zeigt eine Draufsicht auf eine Schwingungsminderungseinrichtung nach einer Ausführung der vorliegenden Erfindung.

Die Schwingungsminderungseinrichtung weist ein Gehäuse mit einem Gehäusekörper 50 und einem Gehäusedeckel 51, und einen Körper 16 auf, der in dem Gehäuse angeordnet ist und der sich, solange wie die Struktur 12 in der mindestens einen Mode angeregt ist, wenigstens zeitweise, in einer Ausführung unaufhörlich, entlang der Richtung j, wie durch den Doppelpfeil P1 veranschaulicht, bewegt. Hierbei ist ein Flächenabschnitt Z1 der Innenwand des Gehäusekörpers 50 eben, damit der Körper 16 abrollen kann, während die anderen Flächenabschnitte Z2, Z3 und Z4 jeweils eine Wölbung aufweisen. Im Beispiel der Fig. 3 sind die Flächenabschnitte Z2, Z3 und Z4 jeweils konkav gewölbt.

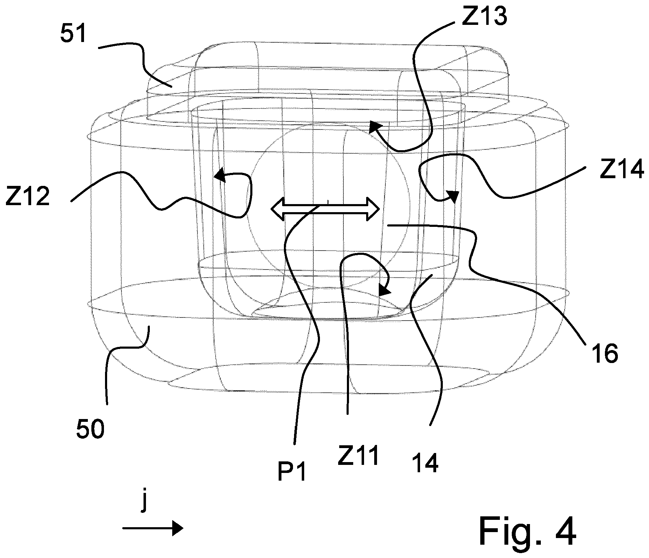

Fig. 4 zeigt eine dreidimensionale Ansicht einer Schwingungsminderungseinrichtung nach einer Ausführung der vorliegenden Erfindung.

Die Schwingungsminderungseinrichtung weist ein Gehäuse mit einem Gehäusekörper 50 und einem Gehäusedeckel 51, und einen in dem Gehäuse angeordneten Körper 16 auf, der sich, solange wie die Struktur 12 in der mindestens einen Mode angeregt ist, wenigstens zeitweise, in einer Ausführung unaufhörlich, entlang der Richtung j, wie durch den Doppelpfeil P1 veranschaulicht, bewegt. Hierbei sind die Flächenabschnitte Z11, Z12 und Z14 der Innenwand des Gehäusekörpers 50 gewölbt, während der Flächenabschnitt Z13 der Innenwand des Gehäusedeckels 51 eben bzw. flach ist.

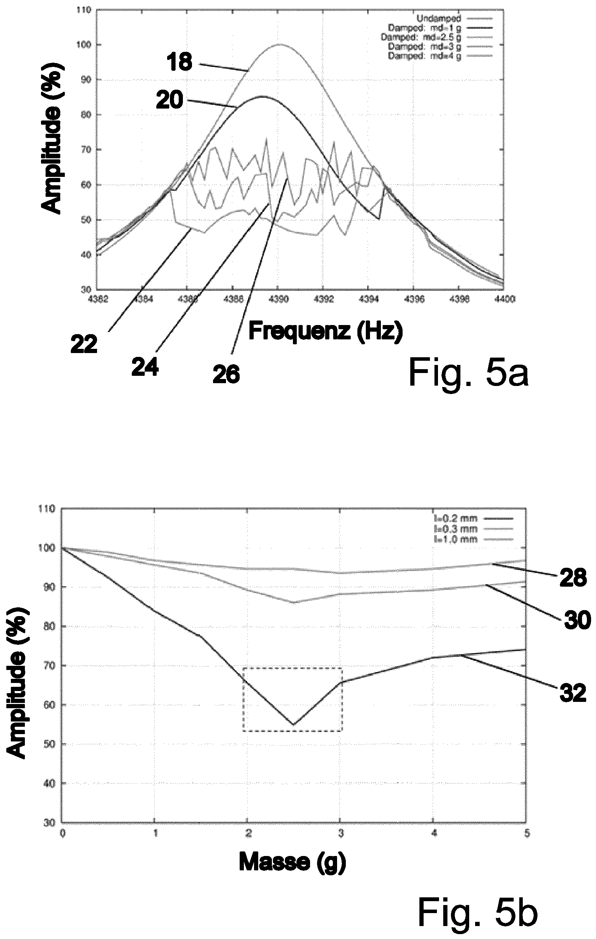

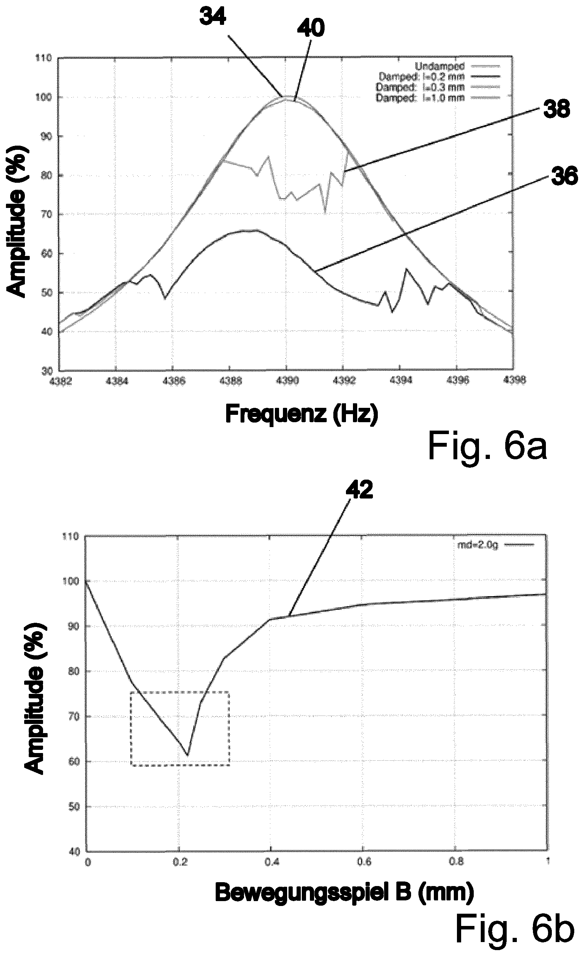

Der Effekt und die Effektivität der Schwingungsminderung mithilfe von Stoßkontakten und Impulsüberträgen unter Verwendung der Schwingungsminderungseinrichtung wird anhand der Fig. 5 und 6 näher erläutert, welche ein experimentell bestätigtes Verhalten zeigen.

Fig. 5a zeigt Schwingungsverläufe, d.h. Amplitude-Frequenz-Verläufe, für eine schwingfähige Struktur ohne Schwingungsminderungseinrichtung (Verlauf 18), mit einer Schwingungsminderungseinrichtung mit einem Körper 16 der Masse 1 g (Verlauf 20), mit einer Schwingungsminderungseinrichtung mit einem Körper 16 der Masse 2,5 g (Verlauf 22), mit einer Schwingungsminderungseinrichtung mit einem Körper 16 der Masse 3 g (Verlauf 24) und mit einer Schwingungsminderungseinrichtung mit einem Körper 16 der Masse 4 g (Verlauf 26). Hierbei beträgt das Bewegungsspiel B bei den Verläufen 20 - 26 jeweils 0,2 mm.

Fig. 5a zeigt deutlich, dass bei der Ausführung von insbesondere unaufhörlichen Stoßkontakten von Körpern 16 mit größeren Massen (Verläufe 22, 24, 26) die Schwingungsamplitude der Mode signifikant gegenüber solchen Anordnungen ohne Stoßkontakte oder Stoßkontakte eines Körpers 16 mit geringer Masse (Verläufe 18, 20) gemindert werden können.

Fig. 5b zeigt für das Beispiel der Fig. 5a die Abhängigkeit der Schwingungsamplitudenminderung von der Masse des Körpers 16 jeweils für ein Bewegungsspiel von 1,0 mm (Verlauf 28), 0,3 mm (Verlauf 30) und 0,2 mm (Verlauf 32).

Fig. 6a zeigt Schwingungsverläufe für eine schwingfähige Struktur 12 ohne Schwingungsminderungseinrichtung (Verlauf 34) sowie mit einer Schwingungsminderungseinrichtung mit einem Körper 16 der Masse 2 g, jeweils mit einem Bewegungsspiel B von 0,2 mm (Verlauf 36), 0,3 mm (Verlauf 38) und 1,0 mm (Verlauf 40).

Fig. 6b zeigt für das Beispiel der Fig. 6a die Abhängigkeit der Amplitudenminderung vom Bewegungsspiel B des Körpers 16 der Masse 2 g (Verlauf 42).

In den Beispielen der Fig. 5 und 6 sind die Stöße im Wesentlichen elastisch und Energiedissipation durch Reibung gering, insbesondere geringer als 5% pro Periode der mit der Schwingung assoziierten kinetischen Energie des Körpers 16.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

Bezugszeichenliste

| | |
|---|---|
| 10 | Anordnung zur Minderung einer Schwingung |
| 12 | Struktur |
| 14 | Kavität |
| 16 | Körper |
| 18 | Amplitude-Frequenz-Verlauf ohne Schwingungsminderungseinrichtung |
| 20 | Amplitude-Frequenz-Verlauf mit Körper der Masse 1 g |
| 22 | Amplitude-Frequenz-Verlauf mit Körper der Masse 2,5 g |
| 24 | Amplitude-Frequenz-Verlauf mit Körper der Masse 3 g |
| 26 | Amplitude-Frequenz-Verlauf mit Körper der Masse 4 g |
| 28 | Amplitude-Masse-Verlauf für ein Bewegungsspiel von 1,0 mm |
| 30 | Amplitude-Masse-Verlauf für ein Bewegungsspiel von 0,3 mm |
| 32 | Amplitude-Masse-Verlauf für ein Bewegungsspiel von 0,2 mm |
| 34 | Amplitude-Frequenz-Verlauf ohne Schwingungsminderungseinrichtung |
| 36 | Amplitude-Frequenz-Verlauf mit Körper der Masse 2 g und Bewegungsspiel von 0,2 mm |
| 38 | Amplitude-Frequenz-Verlauf mit Körper der Masse 2 g und Bewegungsspiel von 0,3 mm |
| 40 | Amplitude-Frequenz-Verlauf mit Körper der Masse 2 g und Bewegungsspiel von 1,0 mm |
| 42 | Amplitude-Bewegungsspiel-Verlauf für Körper der Masse 2 g |
| 50 | Gehäusekörper |
| 51 | Gehäusedeckel |
| F1-F4 | Flächenabschnitte |
| W1-W4 | Flächenabschnitte |
| Z1-Z4 | Flächenabschnitte |
| Z11-Z14 | Flächenabschnitte |

**Patentansprüche**

1. Anordnung (10) zur Minderung einer Schwingung einer schwingfähigen Struktur (12), aufweisend:

   - eine Struktur (12) mit mindestens einer Mode in mindestens einer Richtung (j), und
   - mindestens eine Schwingungsminderungseinrichtung, die zumindest ein eine Kavität (14), insbesondere geschlossene Kavität (14), aufweisendes Gehäuse, welches durch die Struktur (12) gebildet ist oder an der Struktur (12) vorgesehen ist, und zumindest einen Körper (16) aufweist, der zur Ausführung von Stoßkontakten mit einem ersten Flächenabschnitt (F1, W2, Z2, Z12) und einem zweiten Flächenabschnitt (F2, W4, Z2, Z4, Z14) einer Innenwand des Gehäuses in der zumindest einen Kavität (14) derart angeordnet ist, dass er solange, wie die Struktur (12) in der mindestens einen Mode in der mindestens einen Richtung (j) angeregt ist, wenigstens zeitweise, insbesondere unaufhörlich, Stoßkontakte mit dem ersten Flächenabschnitt und dem zweiten Flächenabschnitt der Innenwand des Gehäuses ausführt, wobei

   der erste Flächenabschnitt und/oder der zweite Flächenabschnitt der Innenwand des Gehäuses eine Wölbung aufweisen.

2. Anordnung (10) nach dem vorhergehenden Anspruch, wobei der zumindest eine Körper (16) eine Kugel mit einem Radius R ist, und für eine Krümmung k der Wölbung gilt: $-\frac{1}{R} \leq k \leq \frac{1}{R}$, insbesondere $-\frac{1}{R} \leq k \leq -\frac{1}{4R}$ oder $\frac{1}{4R} \leq k \leq \frac{1}{R}$.

3. Anordnung (10) nach Anspruch 2, wobei für die Krümmung k gilt: k #0.

4. Anordnung (10) nach Anspruch 2 oder 3, wobei für die Krümmung k der Wölbung gilt: $k = -\frac{1}{R}$, oder für die Krümmung k der Wölbung gilt $k = \frac{1}{R}$.

5. Anordnung (10) einem der vorhergehenden Ansprüche, wobei ein dritter Flächenabschnitt (F3, F4, W3, Z1, Z13) der Innenwand, der sich parallel zu der mindestens einen Richtung (j) erstreckt, ein ebener Flächenabschnitt ist und/oder wobei der erste und der zweite Flächenabschnitt der Innenwand die Wölbung aufweisen.

**6.** Anordnung (10) nach dem vorhergehenden Anspruch, wobei durch die Schwingungsminderungseinrichtung eine maximale Schwingungsamplitude in der mindestens einen Mode um mindestens 5%, 20%, 30%, 40% oder 50% gegenüber der Schwingungsamplitude in der mindestens einen Mode ohne Schwingungsminderungseinrichtung verringert ist.

**7.** Anordnung (10) nach einem der vorhergehenden Ansprüche, wobei die Struktur (12) zumindest ein Teil oder Abschnitt einer Gasturbine, insbesondere eines Flugtriebwerks, insbesondere eine Leit- oder Laufschaufel, eines Motors, insbesondere Elektro- und/oder Verbrennungsmotors, insbesondere KFZ-Motors oder Schiffsmotors, einer Turbine, einer Fertigungsmaschine, insbesondere zum Fräsen und/oder Drehen, eines Triebwerks, insbesondere Flugtriebwerks, eines Antriebs, beispielsweise eines Raketenantriebs, eines Bauwerks, insbesondere Gebäudes oder Brücke, eines Fahrzeugs, insbesondere Automobils, eines Flugzeugs, einer Rakete, eines Satelliten oder irgendeines Verkehrsmittels ist, ein damit in Kontakt stehendes Teil ist oder ein damit in Kontakt stehender Abschnitt ist.

**8.** Anordnung (10) nach einem der vorhergehenden Ansprüche, wobei die Gesamtmasse des zumindest einen Körpers (16), insbesondere aller Körper der Schwingungsminderungseinrichtung, mindestens 100-mal, vorzugsweise mindestens 1000-mal, insbesondere mindestens 10000-mal kleiner ist als die in der jeweiligen Mode schwingende modale Masse der Struktur (12) und/oder die in der jeweiligen Mode schwingende modale Masse höchstens 200000-mal, vorzugsweise höchstens 100000-mal, insbesondere höchstens 50000-mal größer ist als die Gesamtmasse des zumindest einen Körpers (16).

**9.** Anordnung (10) nach einem der vorhergehenden Ansprüche, bei der an der Struktur (12) nur in solchen Bereichen die mindestens eine Schwingungsminderungseinrichtung angeordnet ist bzw. sind, in denen die Schwingungsamplitude in der mindestens einen Mode ohne Schwingungsminderungseinrichtung in dem jeweiligen Bereich mindestens 0,1%, vorzugsweise mindestens 1% und/oder höchstens 100%, 50%, 20%, 10%, 5%, 1%, 0,5%, 0,2% der maximalen Schwingungsamplitude in der mindestens einen Mode ohne Schwingungsminderungseinrichtung in dem jeweiligen Bereich beträgt.

**10.** Anordnung (10) nach einem der vorhergehenden Ansprüche, wobei ein Bewegungsspiel B mindestens eines der ein oder mehreren Körper (16), insbesondere aller Körper (16), in mindestens einer Richtung (j), insbesondere in allen Richtungen, höchstens das 2-fache, vorzugsweise höchstens das 1-fache, insbesondere höchstens das 0,5-fache, einer, insbesondere maximalen, Querschnittsabmessung des Körpers (16) beträgt und/oder mindestens das 0,05-fache, vorzugsweise mindestens das 0,1-fache, insbesondere mindestens das 0,2-fache, einer, insbesondere maximalen, Querschnittsabmessung des Körpers (16) beträgt.

**11.** Anordnung (10) gemäß einem der vorhergehenden Ansprüche, wobei der zumindest eine Körper (16) eine metallische oder keramische Oberfläche aufweist und der erste Flächenabschnitt (F1, W2, Z2, Z12) und/oder der zweite Flächenabschnitt (F2, W4, Z2, Z4, Z14) der Innenwand des Gehäuses eine metallische und/oder keramische Oberfläche ist, so dass die Stoßkontakte zwischen Metall und Metall, zwischen Keramik und Keramik oder zwischen Metall und Keramik stattfinden. 12. Anordnung (10) gemäß einem der vorhergehenden Ansprüche, wobei der erste Flächenabschnitt (F1, W2, Z2, Z12) und der zweiten Flächenabschnitt (F2, W4, Z2, Z4, Z14) sich einander gegenüberstehen, und/der wobei einer des ersten und zweiten Flächenabschnitts konvex oder konkav gekrümmt ist und/und der andere des ersten und zweiten Flächenabschnitts konvex oder konkav gekrümmt ist oder eben ist.

Fig. 1

Fig. 2

Fig. 3

Fig. 4

Fig. 5a

Fig. 5b

Fig. 6a

Fig. 6b

Europäisches
Patentamt

European
Patent Office

Office européen
des brevets

# EUROPÄISCHER RECHERCHENBERICHT

**Nummer der Anmeldung**

**EP 22 17 3171**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 6 827 551 B1 (DUFFY KIRSTEN P [US] ET AL) 7. Dezember 2004 (2004-12-07) <br> * Abbildung 2c * <br> * Tabelle 1 * <br> ----- | 1-3,5-7, 9,10,12 | INV. <br> F16F7/10 |
| X | US 2012/024646 A1 (TSUGIHASHI KAZUKI [JP] ET AL) 2. Februar 2012 (2012-02-02) <br> * Abbildung 8 * <br> * Absatz [0038] * <br> ----- | 1,2,4,8, 11 | |
| X | US 2 349 187 A (MEYER CHARLES A) 16. Mai 1944 (1944-05-16) <br> * Abbildung 2 * <br> ----- | 1 | |
| X | EP 3 315 718 A1 (MTU AERO ENGINES AG [DE]) 2. Mai 2018 (2018-05-02) <br> * Abbildung 1 * <br> ----- | 1 | |
| X | US 2013/058785 A1 (KELLERER RUDOLF [DE] ET AL) 7. März 2013 (2013-03-07) <br> * Abbildungen 1-3 * <br> ----- | 1 | **RECHERCHIERTE SACHGEBIETE (IPC)** |
| A | EP 3 667 020 A1 (MTU AERO ENGINES AG [DE]) 17. Juni 2020 (2020-06-17) <br> * Abbildungen 2,3,4 * <br> ----- | 1-12 | F16F |

Der vorliegende Recherchenbericht wurde für alle Patentansprüche erstellt

| Recherchenort | Abschlußdatum der Recherche | Prüfer |
|---|---|---|
| Den Haag | 12. Oktober 2022 | Beaumont, Arnaud |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 22 17 3171

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-10-2022

| Im Recherchenbericht angeführtes Patentdokument | Datum der Veröffentlichung | Mitglied(er) der Patentfamilie | Datum der Veröffentlichung |
|---|---|---|---|
| US 6827551 B1 | 07-12-2004 | KEINE | |
| US 2012024646 A1 | 02-02-2012 | CN 102388235 A | 21-03-2012 |
| | | JP 5244018 B2 | 24-07-2013 |
| | | JP 2010242940 A | 28-10-2010 |
| | | US 2012024646 A1 | 02-02-2012 |
| | | WO 2010117068 A1 | 14-10-2010 |
| US 2349187 A | 16-05-1944 | KEINE | |
| EP 3315718 A1 | 02-05-2018 | DE 102016221069 A1 | 26-04-2018 |
| | | EP 3315718 A1 | 02-05-2018 |
| | | ES 2775729 T3 | 28-07-2020 |
| | | US 2018119552 A1 | 03-05-2018 |
| US 2013058785 A1 | 07-03-2013 | DE 102012016978 A1 | 21-03-2013 |
| | | EP 2568117 A1 | 13-03-2013 |
| | | US 2013058785 A1 | 07-03-2013 |
| EP 3667020 A1 | 17-06-2020 | DE 102018221533 A1 | 18-06-2020 |
| | | EP 3667020 A1 | 17-06-2020 |
| | | US 2020240277 A1 | 30-07-2020 |

EPO FORM P0461

Für nähere Einzelheiten zu diesem Anhang : siehe Amtsblatt des Europäischen Patentamts, Nr.12/82